# EUROPEAN PATENT APPLICATION

(11) **EP 1 162 085 A1**
(43) Date of publication of application: **12.12.2001**
(21) Application number: 99954365.5
(22) Date of filing: 04.11.1999
(51) Int. Cl.: B60C 5/14

(54) **TUBELESS TIRE**

(30) Priority: 21.12.1998 JP 36206398
(71) Applicant: Honda Giken Kogyo Kabushiki Kaisha, Minato-ku, Tokyo 107-8556 (JP)
(72) Inventor: YAMAGIWA, Toshio, K. K. Honda Gijutsu Kenkyusho, Wako-shi, Saitama 351-0193 (JP)
(74) Representative: Liska, Horst, Dr.-Ing.
(86) International application number: JP9906129
(87) International publication number: WO0037268

(57) **Abstract**

In a tubeless tire, an air blocking layer formed from ethylene-vinyl alcohol copolymer for air-tightly covering an inner surface of a tire body is integrally provided in the tire body. Therefore, air leaking in the tire can effectively be prevented to do away with the need to periodically check and replenish tire pressure, thereby simplifying tire maintenance extremely.

## Description

### FIELD OF THE INVENTION

The present invention relates to a tire, and particularly to a tubeless tire having a tire body mounted in an outer periphery of a rim, and an annular air chamber directly formed between an inner surface of the tire body and the rim.

### BACKGROUND ART

The above-described tubeless tire is advantageous in that there is no need to insert a rubber tube for forming an air chamber between the tire body and the rim and that handling is simple. Hence, such tires have conventionally become widespread.

With such conventional tubeless tire, an air opaque material called an inner liner is affixed to an inner surface of a rubber tire body, in order to retain air in the tire, namely in the air chamber, and an isobutylene-isoprene rubber is commonly used as this inner liner.

However, rubber type materials are generally slightly porous to air, which means that even if an inner liner formed of isobutylene-isoprene rubber is used, air will gradually leak out from the inside of the tire with the lapse of time, and air pressure will be somewhat reduced.

This means that in the related art, air pressure inside the tire must be periodically checked and replenished, and these maintenance operations are troublesome.

### DISCLOSURE OF THE INVENTION

The present invention has been accomplished in view of the above described circumstances, and the object of the invention is to provide a tubeless tire that can solve the above described problems.

In order to achieve the above described object, according to the present invention, there is provided a tubeless tire having a tire body mounted in an outer periphery of a rim, and an annular air chamber directly formed between an inner surface of the tire body and the rim, characterized in that an air blocking layer formed from an ethylene-vinyl alcohol copolymer for air-tightly covering the inner surface of the tire body is integrally provided on the tire body.

With the above arrangement, since the air blocking layer formed from an ethylene-vinyl alcohol copolymer for air-tightly covering the inner surface of the tire body can effectively prevent leakage of air in the tire, there is no longer need to periodically check and replenish the air pressure in the tire, as in the related art, and maintenance of the tire is made extremely easy. Furthermore, tire pressure can be kept at an appropriate value for a long time and it is possible to avoid situations such as travelling with reduced tire pressure as much as possible, which means that a reduction in fuel consumption can be expected by avoiding increase in rolling resistance of the tire caused by lowered air pressure, and the life span of the tire can also be prolonged by reducing uneven abrasion of the tire.

In addition to the above arrangement, there is provided a tubeless tire having an elastomer adhered to the inner surface of the tire body and an adhesive resin for adhering between the elastomer and the air blocking layer, the elastomer and the adhesive resin being interposed between the air blocking layer and the tire body.

With the above arrangement, the air blocking layer formed from an ethylene-vinyl alcohol copolymer is not directly adhered to the inner surface of the tire body, but adhered via an elastomer firmly to the air blocking layer using the adhesive resin, which means that adhesion to the inner surface of the tire body is improved.

### BRIEF DESCRIPTION OF THE DRAWINGS

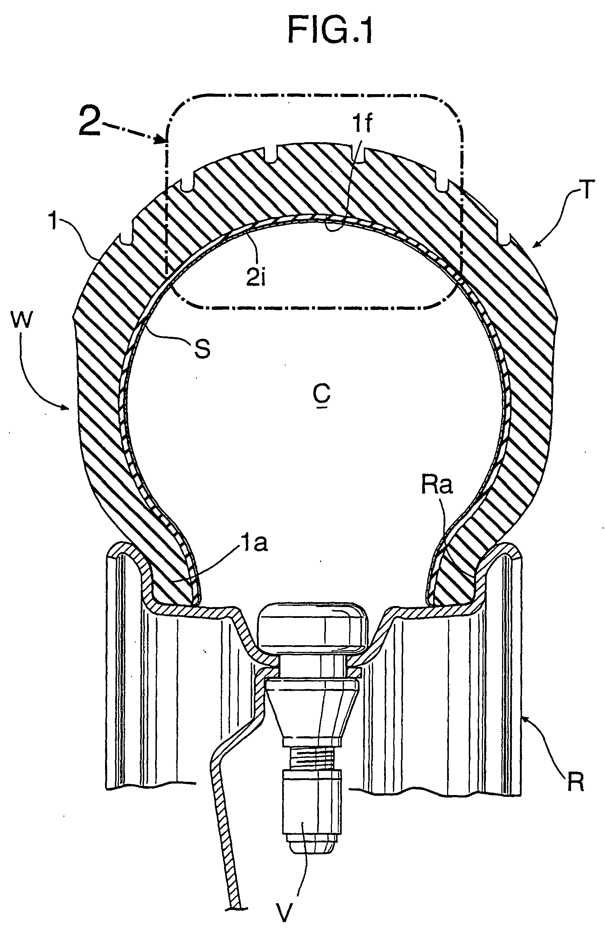

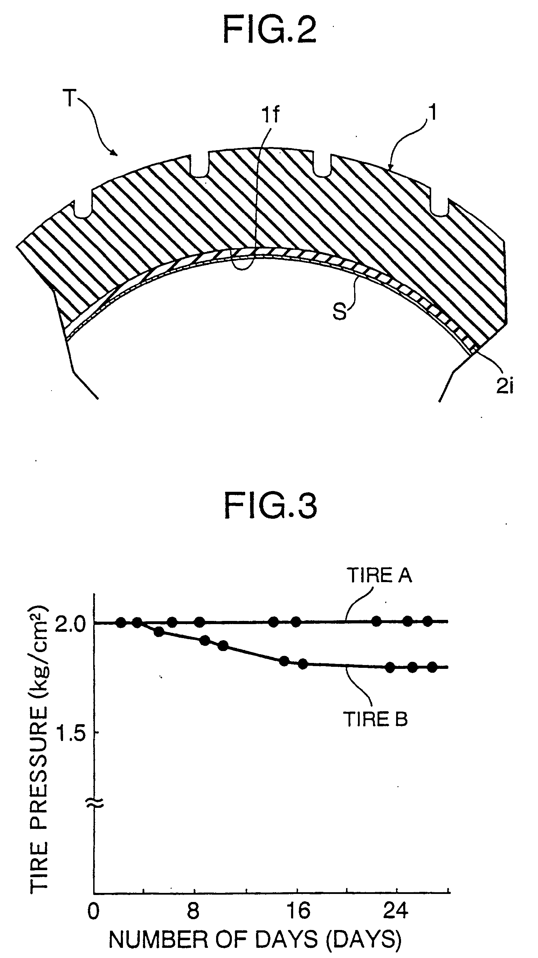

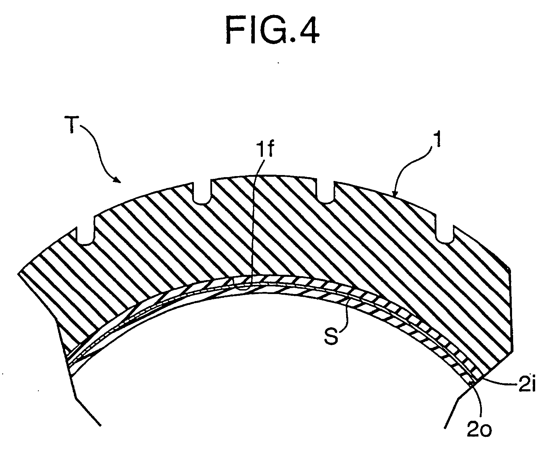

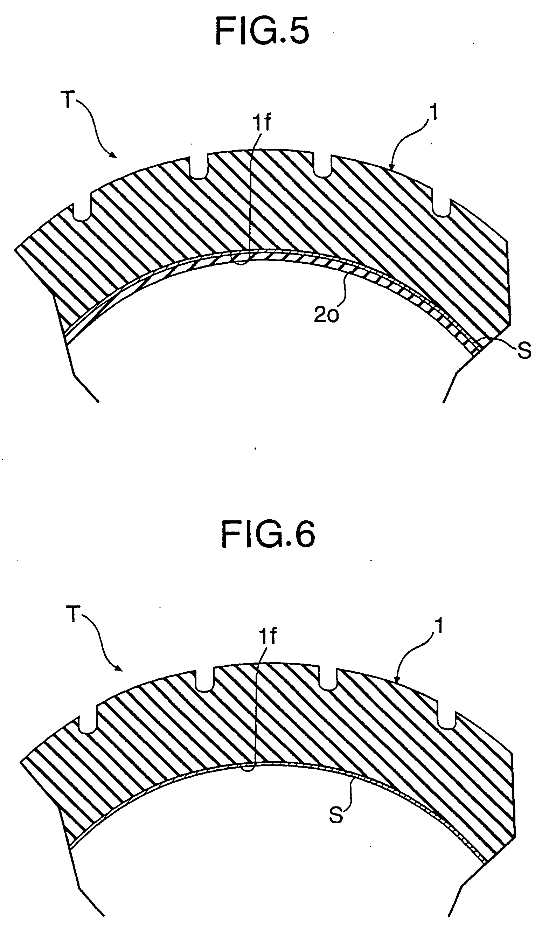

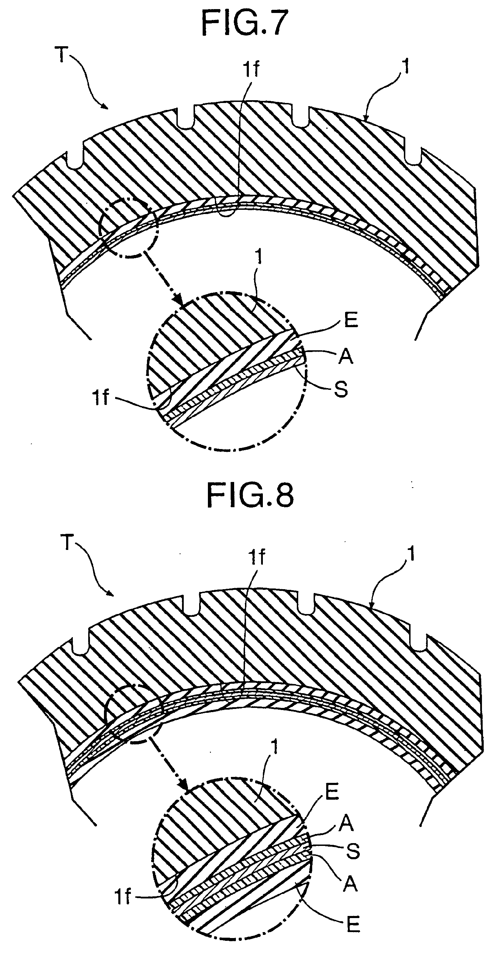

Fig. 1 is a cross sectional view of an essential part of a vehicle wheel according to a first embodiment of the present invention; Fig. 2 is an enlarged sectional view of a portion indicated by an arrow 2 in Fig. 1; Fig. 3 is a graph representing variations in tire pressure with respect to the number of days elapsed; Fig. 4 is an enlarged sectional view corresponding to Fig. 2, showing a second embodiment; Fig. 5 is an enlarged sectional view corresponding to Fig. 2, showing a third embodiment; Fig. 6 is an enlarged sectional view corresponding to Fig. 2, showing a fourth embodiment; Fig. 7 is an enlarged sectional view corresponding to Fig. 2, showing a fifth embodiment; and Fig. 8 is an enlarged sectional view corresponding to Fig. 2, showing a sixth embodiment.

### BEST MODE FOR CARRYING OUT THE INVENTION

A mode for carrying out the present invention will now be specifically described in the following based on the embodiments illustrated in the attached drawings.

Firstly, in a first embodiment shown in Figs. 1 and 2, a vehicle wheel W for a motor cycle comprises an annular metal rim R, and a tubeless tire T mounted and fixed in an outer periphery of the rim R. A tire body 1 of this tubeless tire T, similarly to the ordinary tire of the related art, is formed mainly of rubber, and left and right inner periphery ends 1a are fitted into and fixed to annular grooved engagement recesses Ra formed in the outer periphery of the rim R.

An annular air chamber C which can be filled with and retain a high air pressure is directly formed between an inner surface 1f of the tire body 1 and the rim R. A conventional well-known opening and closing valve V used for supplying and removing high-pressure air to and from the air chamber C is provided inside the rim R at one side of the rim R.

An air blocking layer S formed from an ethylene-vinyl alcohol copolymer air-tightly covering over the entire inner surface 1f of the tire body 1 is integrally provided in the tire body 1. This ethylene-vinyl alcohol copolymer (for example, trade name EVAL, manufactured by the Kuraray Company) is obtained by saponification of a copolymer of ethylene and vinyl acetate, and in the illustrated example is formed as a thin film having a thickness of 15 - 30 µm, and is used as the air blocking layer S.

The air blocking layer S formed from this type of ethylene-vinyl alcohol copolymer is directly or indirectly joined to the inner surface 1f of the tire body 1, as specifically shown below, over the entire surface.

Specifically, in the first embodiment shown in Fig. 2, similarly to the conventional ordinary tubeless tire, an inner liner 2i formed from isobutylene-isoprene rubber is laminated on the entire inner surface of the tire body 1 in the shape of a layer, and integrally joined using a joining means such as adhesion. Also, the air blocking layer S formed from ethylene-vinyl alcohol copolymer is laminated on the entire surface of the inner liner 2i, and integrally joined using a joining means such as adhesion.

The graph of Fig. 3 shows variations in tire pressure for the tire A of the above-described embodiment and a tire B using only the inner liner 2i formed of isobutylene-isoprene rubber as a sealing material (and so not having the air blocking layer S), with initial air pressure of 2kg/cm² and travelling 160km per day at a speed of 95km/h. According to these test results, it was confirmed that there was hardly any variation in air pressure with tire A having the air blocking layer S, even after approximately one month, compared to slight reduction in air pressure that occurs through passage of days with the tire B without the air blocking layer S.

With the above-described embodiment; in addition to the well-known effect of preventing leakage using the inner liner 2i, since it is also possible to extremely effectively prevent leakage of air from the air chamber C using the air blocking layer S formed from ethylene-vinyl alcohol copolymer having more extremely remarkable air blocking function than that of the inner liner, it becomes unnecessary to periodically check and replenish the air pressure in the tire, as in the related art, it is possible to prolong the interval between maintenance operation to that extent and the maintenance operation itself is made easy.

In the second embodiment shown in Fig. 4, in addition to the structure of the first embodiment, an inner liner 2o formed of isobutylene-isoprene rubber is laminated in a layered form on the surface of the air blocking layer S (namely the air chamber C side surface), and is integrally joined using a joining means such as adhesion. That is, the air blocking layer S has a sandwich structure interposed between the pair of inner liners 2i and 2o.

In this embodiment, leakage of air is even more effectively prevented using the multilayered inner liners 2i and 2o than in the first embodiment. In addition, the surface of the air blocking layer S formed from ethylene-vinyl alcohol copolymer is covered by the inner liner 2o and is not exposed in the air chamber C, which means that it is possible to avoid contact of the air blocking layer S with other objects at the time of transporting or storing the tire, even if the air blocking layer S is a thin film, and the inner liner 2o can also serve a protecting means for the air blocking layer S, thereby simplifying the structure.

A third embodiment shown in Fig. 5 does not have the inner liner 2i at the inner side (namely the side contacting the inner surface 1f of the tire body 1) in the second embodiment, and the air blocking layer S formed from ethylene-vinyl alcohol copolymer is directly laminated on the inner surface 1f of the tire body 1 and integrally joined using a joining means such as adhesion. Accordingly, in this embodiment also, the air blocking layer S formed from ethylene-vinyl alcohol copolymer is covered by an outer inner liner 2o and is not exposed in the air chamber C, which means that similar function and effect as in the second embodiment can be expected.

A fourth embodiment shown in Fig. 6 does not have the inner liner 2o of the third embodiment and the air blocking layer S formed from ethylene-vinyl alcohol copolymer is exposed inside the air chamber C. In this embodiment, leaving out the inner liner formed of isobutylene-isoprene rubber makes it possible to simplify the structure of the tire to that extent, and associated reductions in cost can be expected.

In a fifth embodiment shown in Fig. 7, a layer-shaped elastomer E adhered to an inner surface 1f of a tire body 1, and an adhesive resin A for strongly adhering between the elastomer E and an air blocking layer S formed from ethylene-vinyl alcohol copolymer are interposed between the air blocking layer S and the tire body 1. In this embodiment, an adhesive polyolefin (trade name ADMER, manufactured by Mitsui Chemicals Ltd.) having strong adhesiveness by introducing a particular functional group into polyolefin is used as the adhesive resin A. Also, in this embodiment, a thermoplastic resin that can be adhered using the adhesive resin A, for example, an olefin type thermoplastic elastomer (trade name MILASTOMER, manufactured by Mitsui Chemicals Ltd.), is used as the elastomer E.

In the manufacturing process of the tire body 1, after one surface of the elastomer E has been adhered to one surface of the air blocking layer S formed in a film shape, for example, through the adhesive resin A, the air blocking layer S is joined to the tire body 1 by adhering the other surface of the elastomer E to the inner surface 1f of the tire body.

With the fifth embodiment, the air blocking layer S formed from ethylene-vinyl alcohol copolymer is not directly adhered to the inner surface 1f of the tire body but is instead adhered via the elastomer E firmly adhered to the air blocking layer S using the adhesive resin A, which means that compared to the case where the air blocking layer S is directly adhered to the inner surface 1f of the tire body, adhesiveness to the inner surface 1f of the tire body is increased, and the air blocking layer is hardly peeled off from the inner surface 1f.

In a sixth embodiment shown in Fig. 6, a layered elastomer E is also adhered to the other surface (namely the surface facing the air chamber C) of the air blocking layer S formed from ethylene-vinyl alcohol copolymer, of the fifth embodiment, via the same adhesive resin A, as described above. Specifically, the air blocking layer S is sandwiched between the inner and outer elastomers E, E adhered to both surfaces of the air blocking layer using respective adhesive resin A, A.

With the sixth embodiment, similar function and effect to those of the fifth embodiment can be achieved, and further, since both of front and rear surfaces of the air blocking layer S are integrally covered by the elastomer E, even if the air blocking layer S is formed of a thin film, it can be extremely effectively prevented from being damaged due to contact with other objects.

Embodiments of the present invention have been described above, but the present invention is not limited to these embodiments and various modifications are possible within the scope of the claims of the invention. For example, in the first to third embodiments, lamination of a two layer or three layer structure comprising inner liners of isobutylene-isoprene rubber and an air blocking layer of ethylene-vinyl alcohol copolymer is described, but in the present invention, it is also possible to laminate four or more layers of alternate inner liner and air blocking layer.

### INDUSTRIAL APPLICABILITY

The tubeless tire according to the present invention is applicable to a two-wheeled motor vehicle and further to another vehicle such as a bus, a truck or an automobile.

## Claims

1. A tubeless tire having a tire body (1) mounted in an outer periphery of a rim (R), and an annular air chamber (C) directly formed between an inner surface (1f) of said tire body (1) and the rim (R),
**characterized in that** an air blocking layer (S) formed from an ethylene-vinyl alcohol copolymer air-tightly covering the inner surface (1f) of said tire body (1) is integrally provided on said tire body (1).

2. A tubeless tire according to claim 1, wherein an elastomer (E) adhered to the inner surface (1f) of said tire body (1) and an adhesive resin (A) for adhering between said elastomer (E) and said air blocking layer (S) are interposed between said air blocking layer (S) and said tire body (1).
